(19)

Europäisches
Patentamt
European
Patent Office
Office européen
des brevets

(11) **EP 4 266 417 B1**

(12) **EUROPEAN PATENT SPECIFICATION**

(45) Date of publication and mention
of the grant of the patent:
**29.04.2026 Bulletin 2026/18**

(21) Application number: **22914693.1**

(22) Date of filing: **26.12.2022**

(51) International Patent Classification (IPC):
***C01G 53/50*** (2025.01)     ***H01M 4/525*** (2010.01)
***H01M 10/0525*** (2010.01)

(52) Cooperative Patent Classification (CPC):
**C01G 53/50; C01G 53/82; H01M 4/131; H01M 4/36;**
**H01M 4/366; H01M 4/485; H01M 4/505;**
**H01M 4/525; H01M 10/052; H01M 10/0525;**
C01P 2002/52; C01P 2002/72; C01P 2002/74;
C01P 2004/03; C01P 2004/50;         (Cont.)

(86) International application number:
**PCT/CN2022/142015**

(87) International publication number:
**WO 2023/125439 (06.07.2023 Gazette 2023/27)**

(54) **POSITIVE ELECTRODE MATERIAL, PREPARATION METHOD THEREFOR AND USE THEREOF, AND LITHIUM ION BATTERY**

POSITIVELEKTRODENMATERIAL, HERSTELLUNGSVERFAHREN DAFÜR UND VERWENDUNG DAVON SOWIE LITHIUM-IONEN-BATTERIE

MATÉRIAU D'ÉLECTRODE POSITIVE, SON PROCÉDÉ DE PRÉPARATION ET SON UTILISATION, ET BATTERIE AU LITHIUM-ION

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority:  **27.12.2021   CN 202111611309**

(43) Date of publication of application:
**25.10.2023   Bulletin 2023/43**

(73) Proprietor: **Beijing Easpring Material Technology Co., Ltd.**
**Beijing 100160 (CN)**

(72) Inventors:
• **LI, Wenhui**
  **Beijing 100160 (CN)**
• **LI, Jingjing**
  **Beijing 100160 (CN)**

• **WANG, Jingpeng**
  **Beijing 100160 (CN)**
• **LIU, Yafei**
  **Beijing 100160 (CN)**
• **CHEN, Yanbin**
  **Beijing 100160 (CN)**

(74) Representative: **Ström & Gulliksson AB**
**P.O. Box 4188**
**203 13 Malmö (SE)**

(56) References cited:
WO-A1-2021/066576       CN-A- 110 313 087
CN-A- 112 635 750       CN-A- 113 651 369
KR-A- 20150 081 936       US-A1- 2013 052 535
US-A1- 2015 099 159       US-A1- 2021 280 866
US-A1- 2022 209 232

(52) Cooperative Patent Classification (CPC): (Cont.)
C01P 2004/51; C01P 2004/61; C01P 2006/12;
C01P 2006/16; C01P 2006/17; C01P 2006/40;
H01M 2004/021; H01M 2004/028; Y02E 60/10

**Description**

**CROSS REFERENCE TO RELATED APPLICARTIONS**

The present application claims the rights and interests of Chinese patent application with an Application Number 202111611309.0, filed on December 27, 2021.

**FIELD**

The present disclosure relates to the technical field of cathode materials for lithium-ion battery, particularly to a cathode material, a preparation method and a use thereof, and a lithium-ion battery.

**BACKGROUND**

More and more clean energy has been applied on the electrical devices and power equipments in response to the world-wide urgent pursuit of new energy at present. Since the Sony Corporation pioneered to launch the lithium-ion battery in the 1990s, the lithium-ion battery has attracted wide-spread attention from numerous energy storage device manufactures and the research community due to its prominent advantages such as high specific energy and recyclability. The cathode materials for lithium-ion battery have undergone the evolutions of $LiCoO_2$, $Li_2MnO_4$ and $LiFePO_4$ and the like, the current development goal is mainly focused on the ternary materials.

China has imposed increasingly higher requirements on the endurance mileage and safety of the electric vehicles, the research community has implemented intense and in-depth investigation and research on the high nickel materials in said ternary materials. Among them, the direct effect of a pore diameter of the cathode material at the surface and interior on the material properties is becoming more apparent. When the pore diameter is larger and the more pores are presented, it directly reflects the porosity degree of the material surface and inside, it provide sufficient interfaces for the immersion of the electrolyte and the deintercalation of lithium ions during the charging and discharging process, thereby effectively increasing the actual capacity and the endurance mileage after a single charging process of the cathode material used in a battery. However, if the pore diameter is larger and the more pores are presented, it is prone to cause collapse of the surface crystal structure during the lithium ion deintercalation process, thereby decreasing the actual service life of the battery. Therefore, it is very important to effectively control the most appropriate pore distribution in the particles, especially the pore size and the number of pores during the process of preparing the cathode material.

CN108123119A discloses a nickel-based active material for lithium secondary battery, wherein a porosity of an exterior portion of the secondary particle may be within a range of 6-20%, a porosity of an interior portion of the secondary particle may be 5%. The prior art comprises a cathode material having an exterior porosity more than interior porosity, while in practical use, the electrolyte is immersed the surface of material in a short time, and the porous exterior structure can increase the initial capacity, however, the surface may easily collapse during the process of charging and discharging for many times, causing an irreversible existence of "dead lithium", the interior structure is relatively dense, and the capacity will significantly decrease during the later stage of charging and discharging process, such a situation is undesired for the industrial practitioners.

US2021280866 A1 discloses a cathode material for a Li-ion battery being a ternary composite oxide bearing a clad comprising cobalt and boron. The material shows the presence of mesopores in the range 10-20 nm.

**SUMMARY**

The present disclosure intends to overcome the problem in the prior art that the short-term and long-term properties of a lithium-ion battery in the charging and discharging can hardly balanced, and provides a cathode material and a preparation method and a use thereof; the cathode material has a specific pore diameter, pore diameter distribution, pore diameter area and microcrystallite structure, so that both the short-term properties such as initial charge-discharge capacity and long-term properties such as capacity retention ratio of a lithium ion battery prepared with the cathode material can be improved during the charge-discharge process.

In order to achieve the above objects, a first aspect of the present invention provides a cathode material as defined in appended claim 1.

A second aspect of the present invention provides a method for preparing said cathode material as defined in appended claim 4.

A third aspect the present invention provides a use of the aforementioned cathode material in a lithium-ion battery.

Due to the above-mentioned technical scheme, the cathode material and the method and use thereof provided by the present disclosure produce the following favorable effects:

the cathode material provided by the present disclosure has a specific pore diameter distribution, such that both the short-term properties such as initial charge-discharge capacity and long-term properties such as capacity retention ratio of a lithium ion battery prepared with the cathode material can be improved during the charge-discharge process. Specifically, the cathode material provided by the present disclosure has a specific pore diameter distribution such that in a short term of the charging and discharging process of the lithium-ion battery, the difficulty of side reaction performed between the surface and electrolyte can be controlled, and the surface impedance of lithium ions in the charge-discharge process can also be regulated. Further, the cathode material provided by the present disclosure has a specific microcrystallite structure, pore diameter area, and pore diameter, so that the cathode material can effectively compensate a decrease of the surface capacity caused by an increase of the surface "dead lithium" after collapse of the surface crystal structure, alleviate the aging degree of the material, and extend service life of the battery.

Further, a suitable pore diameter distribution of the cell material can be achieved in the method for preparing the cathode material provided by the present disclosure, by controlling the pH at various phases during the co-precipitation reaction to obtain a suitable precursor, and subsequently controlling the doping and sintering process and the cladding and post-treatment process in the later stage, thereby ensuring the desirable performance for the short-term and long-term properties of a lithium ion battery prepared with the cathode material.

## BRIEF DESCRITION OF THE DRAWINGS

FIG. 1 illustrates a graph of pore diameter distribution and cumulative fraction of pore diameter of the cathode material prepared in Example 1;
FIG. 2 illustrates a Scanning Electron Microscopy (SEM) graph of a cross-section of the cathode material prepared in Example 1;
FIG. 3 illustrates a SEM graph of a cross-section of the cathode material prepared in Comparative Example 1;
FIG. 4 illustrates a SEM graph of a cross-section of the cathode material prepared in Comparative Example 2;
FIG. 5 illustrates a cycle curve graph of lithium-ion batteries fabricated with the cathode materials of Example 1 and Comparative Examples 1-2.

## DETAILED DESCRPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

A first aspect of the present invention provides a cathode material, wherein the cathode material is composed of secondary particles formed by agglomeration of primary particles; and
the pore diameters $d_{10}$, $d_{50}$ and $d_{90}$ of the secondary particles obtained by BJH satisfy the following relationship: $10nm \leq d_{50} \leq 40nm$; $1 \leq k_{90} \leq 8$; wherein $k_{90}=(d_{90}-d_{10})/d_{50}$.

In the present disclosure, $d_{10}$ refers to a pore diameter that the cumulative particle distribution is 10% after the average pore diameters d of the cathode material obtained from BJH are arranged from small to large; $d_{50}$ refers to a pore diameter that the cumulative particle distribution is 50% after the average pore diameters d of the cathode material obtained from BJH are arranged from small to large; $d_{90}$ refers to a pore diameter that the cumulative particle distribution is 90% after the average pore diameters d of the cathode material obtained from BJH are arranged from small to large.

In the present disclosure, a cathode material having the above-described specific pore diameter and pore diameter distribution enables that both the short-term properties such as initial charge-discharge capacity and long-term properties such as capacity retention ratio of a lithium ion battery prepared with the cathode material can be improved during the charge-discharge process.

In the present disclosure, the cathode material having the above-mentioned pore diameter $d_{50}$ exhibits excellent initial charge-discharge capacity and cycle performance. Specifically, when the pore diameter $d_{50}$ is less than 10nm, the internal pore diameter is small, the Li ions in the cathode material are confronted with multiple barriers when shuttling back and forth, which is unfavorable for exertion of the entire capacity of the material. When $d_{50}$ is greater than 40nm, the internal pore diameter is large, the grain strength of the material is weakened, the grain breakage and pulverization would easily occur when a positive electrode of the battery is rolled.

In the present disclosure, the cathode material having the above-mentioned pore diameter $d_{90}$ exhibits excellent initial charge-discharge capacity and cycle performance. Specifically, when $k_{90}$ is less than 1, the pore diameter distribution is close to uniformity, which is quite difficult in practical production; when $k_{90}$ is greater than 8, the pore sizes are not uniformly dispersed in the material, and the degree of infiltration of the electrolyte is different, which leads to different charge and discharge depths, such that the cycle performance finally deteriorates.

Further, the pore diameters $d_{10}$, $d_{50}$ and $d_{90}$ of the secondary particles obtained by BJH satisfy the following relationship:

$$12nm \leq d_{50} \leq 35nm; \ 2 \leq k_{90} \leq 6.$$

According to the present invention a ratio y of an area $S_{II}$ of pore diameters of average sizes of the secondary particles to an average area $S_I$ of the primary particles satisfies the following relationship: $0.01\% \leq \gamma \leq 0.2\%$.

In the present disclosure, the area of pore diameters of average sizes of the secondary particles refers to an area which is calculated based on an average value of the pore diameters.

In the present disclosure, the area $S_{II}$ of pore diameters of average sizes of the secondary particles is calculated according to the following Formula: $S_{II} = \pi(d_{50}/2)^2$; an average area $S_I$ of the primary particles is calculated according to the following Formula: $S_I = a \times b$, wherein a denotes the length of long axis of primary particles, and b denotes the length of short axis of primary particles, the parameters a and b are derived from the Scanning Electron Microscopy (SEM) graph of primary particles; in particular, selecting at least 10 primary particles from a cross-section of cathode material, obtaining the length of long axis and the length of short axis of primary particles, and calculating an average value of the areas of at least 10 primary particles, which is exactly the $S_I$.

In the present disclosure, when the ratio y of an area $S_{II}$ of pore diameters of average sizes of the secondary particles to an average area $S_I$ of the primary particles satisfies the above relationship, the effect of pores can be exerted at a maximum, and the performance of capacity is not affected, so that the battery fabricated with the cathode material simultaneously has high initial charge-discharge capacity and excellent cycle performance.

Further, the ratio y of an area $S_{II}$ of pore diameters of average sizes of the secondary particles to an average area $S_I$ of the primary particles satisfies the following relationship: $0.05\% \leq \gamma \leq 0.20\%$.

According to the present disclosure, an intensity $I_{103}$ of the (003) crystallographic plane and a peak intensity $I_{104}$ of the (104) crystallographic plane of the cathode material obtained by XRD satisfy the following relationship: $1 \leq I_{003}/I_{104} \leq 1.8$.

In the present disclosure, the intensity $I_{103}$ of the (003) crystallographic plane and the peak intensity $I_{104}$ of the (104) crystallographic plane of the cathode material obtained by XRD are obtained by using an XRD diffractometer, through a step scan and a small angle test method.

In the present disclosure, when the an intensity $I_{103}$ of the (003) crystallographic plane and the peak intensity $I_{104}$ of the (104) crystallographic plane of the cathode material obtained by XRD satisfy the aforementioned relationship, it indicates that the microcrystalline structure of the cathode material has a desirable lamellar structure, which causing that the cathode material is more conducive to the deintercalation of lithium ions during the charging and discharging cycles, thereby improving properties of the lithium-ion battery fabricated with the cathode material.

Further, an intensity $I_{103}$ of the (003) crystallographic plane obtained by XRD and a peak intensity $I_{104}$ of the (104) crystallographic plane satisfy the following relationship: $1.1 \leq I_{003}/I_{104} \leq 1.7$.

According to the present disclosure, an interlayer spacing $d_{003}$ of the (003) crystallographic plane and an interlayer spacing $d_{104}$ of the (104) crystallographic plane of the cathode material obtained by XRD satisfy the following relationship: $d_{003}/d_{104} \geq 1$.

In the present disclosure, the interlayer spacing $d_{003}$ of the (003) crystallographic plane and the interlayer spacing $d_{104}$ of the (104) crystallographic plane of the cathode material obtained by XRD are calculated based on the Scherrer Equation or Debye-Scherrer Equation:

$$d = k\lambda/(\beta \cos\theta).$$

In the present disclosure, when the interlayer spacing $d_{003}$ of the (003) crystallographic plane and the interlayer spacing $d_{104}$ of the (104) crystallographic plane of the cathode material obtained by XRD satisfy the aforementioned relationship, it can ensure that the material has an appropriate contact area and angle when contacting with the electrolyte, so that the capacity and cycle performance and other property of the final material are effectively improved.

Further, an interlayer spacing $d_{003}$ of the (003) crystallographic plane and an interlayer spacing $d_{104}$ of the (104) crystallographic plane of the cathode material obtained by XRD satisfy the following relationship:

$$1.2 \leq d003/d_{104} \leq 3.$$

According to the present disclosure, the grain diameters $D_5$, $D_{50}$ and $D_{95}$ of the cathode material satisfy the

following relationship:

$$5\mu m \leq D_{50} \leq 20\mu m;\ 0.5 \leq K_{95} \leq 2,\ \text{wherein}\ K_{95} = (D_{95} - D_5)/D_{50}.$$

In the present disclosure, the grain diameter $D_{50}$ of the cathode material shall fall into the above range; if the $D_{50}$ of the cathode material is less than $5\mu m$, the mobility of particles is poor, thus the requirements on humidity and temperature of the environment during the preparation of cathode material and the fabrication of the battery cell are high. If the $D_{50}$ of the cathode material is larger than $20\mu m$, when the cathode material is used for the fabrication of a battery cell, the capacity of said battery cell cannot be sufficiently exerted, and the particles of the cathode material are easily crushed during the rolling process of the battery.

In the present disclosure, the grain diameters $D_5$, $D_{50}$ and $D_{95}$ of the cathode material are measured by a laser particle size analyzer.

Further, $8\mu m \leq D_{50} \leq 15\mu m$; $0.6 \leq K_{95} \leq 1.8$.

According to the present disclosure, a particle strength MCT of the cathode material satisfies the following relationship:

$$60MPa \leq MCT \leq 200MPa.$$

In the present disclosure, when the particle strength MCT of the cathode material satisfies the above range, the material has an appropriate strength. If the particle strength MCT is less than 60MPa, the particles can be easily crushed during the fabrication process of the pole piece of battery. If the particle strength MCT is greater than 200MPa, it also prevents the deintercalation of lithium ions. Only when the particle strength of the cathode material falls into the above range, the comprehensive performance of the material can be enhanced.

In the present disclosure, the particle strength MCT of the cathode material is measured by a miniature compression test machine.

Further, $80MPa \leq MCT \leq 180MPa$.

According to the present invention the BET of the cathode material satisfies the following relationship: $0.25m^2/g \leq BET \leq 0.95m^2/g$.

In the present disclosure, when the specific surface area BET of the cathode material falls into the above range, the pores on a surface of the cathode material effectively increase the contact area when the material is in contact with the electrolyte, effectively enhancing the exertion of the first charge and discharge capacity of the material; however, if the specific surface area BET of the cathode material is excessively high and the pores on the surface is too much, the surface crystal structure is prone to collapse during the long charge and discharge cycles, thereby causing rapid attenuation of the reversible capacity. Therefore, an appropriate BET ensures that the comprehensive performance of the material can be improved.

Further, $0.3m^2/g \leq BET \leq 0.85m^2/g$.

According to the present invention the cathode material has a composition as shown in Formula I:

$$Li_e(Ni_{1-x-y-z-m}Co_xM_yG_zH_m)O_2 \qquad \text{Formula I;}$$

In the present disclosure, the cathode material comprises a doping element G and a cladding element H, and the specific kinds of doping element G and cladding element H are selected so as to form a different bonding between the transition metal and various doping and cladding elements in the cathode material; in particular, after treating with appropriate process conditions, the battery fabricated with the cathode material has a high initial charge-discharge capacity and excellent cycle performance.

In Formula I $0.95 \leq e \leq 1.1$, $0 < y < 0.15$, $0 < z < 0.03$, $0 < m < 0.03$.

In Formula I M is Mn; G is at least one element selected from the group consisting of Al, Mg, Ca, Sr, Zr, Nb and Mo; and H is at least one element selected from the group consisting of B, Zr, Nb, Al and Y.

The method for preparing a cathode material used in the present disclosure comprises a design of continuously varying the pH during the process of preparing a precursor; in particular, the pH varies within a range of 10-13.

The method for preparing a cathode material used in the present disclosure further comprises a design in regard to a sintering temperature and a sintering time during the sintering process, wherein the sintering temperature is 650-900°C and the sintering time is 6-30h.

The method for preparing a cathode material used in the present disclosure further comprises a design in regard to a treatment temperature and a treatment time during the surface heat treatment process, wherein the heat treatment temperature is within a range of 200-500°C, and the heat treatment time is within a range of 5-18h.

A second aspect of the present invention provides a method for preparing a cathode material comprising:

(1) blending a nickel salt, a cobalt salt and a M salt according to a molar ratio of Ni: Co: M = (1-x-y-z-M): x: y to prepare a mixed salt solution; and using a doping element to prepare a doping element G solution;

(2) adding the mixed salt solution, a precipitating agent, a complexing agent and optionally the doping element G solution into a reaction kettle, carrying out a co-precipitation reaction, and subjecting the reaction product to filtering, washing and drying to obtain a cathode material precursor;

(3) mixing the cathode material precursor, a Li source and optionally the doping element G, and sintering the mixture to obtain a first sintered material;

(4) cladding the first sintered material with a cladding element H, then carrying out a heat treatment, to obtain the cathode material;

wherein the total time for the co-precipitation reaction is t, and the pH values of the different phases of the co-precipitation reaction are controlled;

when the co-precipitation reaction is performed during the 0-t/3 phase, the pH is controlled to be Q1; when the co-precipitation reaction is performed during the t/3-2/3 phase, the pH is controlled to be Q2; and when the co-precipitation reaction is performed during the 2/3t-t phase, the pH is controlled to be Q3;

wherein 13 > Q1 > Q2 > Q3 > 10.

The method for preparing the cathode material used in the present disclosure comprises a design of continuously varying the pH during the preparation process of precursor material; in particular, the pH is varied within a range of 10-13. A suitable pore diameter distribution of the cell material can be achieved, by controlling the pH at various phases during the co-precipitation reaction to obtain a suitable precursor, and subsequently controlling the doping and sintering process and the cladding and post-treatment process in the later stage, thereby ensuring the desirable performance for the short-term and long-term properties of a lithium ion battery prepared with the cathode material.

According to the present disclosure, the nickel salt is at least one selected from the group consisting of nickel sulfate, nickel nitrate and nickel chloride; the cobalt salt is at least one selected from the group consisting of cobalt sulfate, cobalt nitrate and cobalt chloride; the M salt is selected from Al salt and/or Mn salt, more preferably, the Al salt is at least one selected from the group consisting of aluminium sulphate, aluminium nitrate and aluminium chloride, and the Mn salt is at least one selected from the group consisting of manganese sulphate, manganese nitrate and manganese chloride. The precipitating agent is an alkaline solution, such as a sodium hydroxide solution; the complexing agent is aqueous ammonia.

According to the present disclosure, $10h \leq t \leq 120h$, preferably $15h \leq t \leq 100h$.

According to the present disclosure, the temperature of co-precipitation reaction is within a range of 30-100°C, more preferably within a range of 40-70°C.

Further, in order to further provide the cathode material with the specific pore diameter distribution and pore size, the suitable grain diameter and particle strength and other characteristics, the Q1, Q2 and Q3 are decremented in an arithmetic progression.

According to the present disclosure, the co-precipitation reaction is performed in the presence of nitrogen gas and/or oxygen gas.

Further, when the co-precipitation reaction is performed during the 0-t/3 phase, the co-precipitation reaction is performed in the presence of nitrogen gas and oxygen gas, the volume fraction of oxygen gas is 0-5vol%, based on the total volume of nitrogen gas and oxygen gas; when the co-precipitation reaction is performed during the t/3-2/3t phase, the co-precipitation reaction is performed in the presence of nitrogen gas and oxygen gas, the volume fraction of oxygen is 0-3vol%, based on the total volume of nitrogen gas and oxygen gas; when the co-precipitation reaction is performed during the 2/3t-t phase, the co-precipitation reaction is performed in the presence of nitrogen gas.

In the present disclosure, the precursors with a specific structure and pore diameter can be obtained by arranging that the co-precipitation reaction is performed in the presence of oxygen gas during the 0-t/3 phase and t/3-2/3t phase, and the volume fraction of oxygen is respectively controlled within the above-mentioned ranges.

Still further, the 0-t/3 phase of the co-precipitation reaction has a volume fraction of oxygen gas within a range of 0-3vol% based on the total volume of nitrogen gas and oxygen gas, and the t/3-2/3t phase of the co-precipitation reaction has a volume fraction of oxygen gas within a range of 0-2vol% based on the total volume of nitrogen gas and oxygen gas.

In the present disclosure, the cathode material precursor has a composition as shown in Formula II:

$$(NI_{1-x-y}Co_xM_y)(OH)_2 \qquad \text{Formula II;}$$

wherein $x \leq (1-x-y)$, $y \leq (1-x-y)$, $0.5 \leq 1-x-y < 1$, $0 \leq y < 0.2$.

According to the present invention, the Li source is added in an amount such that $0.9 \leq [n(Li)]/[n(Ni)+n(Co)$

+n(M)]≤1.3.

Further, the Li source is added in an amount such that 0.95≤[n(Li)]/[n(Ni)+n(Co)+n(M)]≤1.2.

In the present disclosure, the doping element G can be introduced in step (2) of the co-precipitation reaction process or in step (3) of the sintering process, the present disclosure does not impose particular definition for the addition amount of the doping element G solution in step (2) and/or the addition amount of the doping element G in step (3), so long as the doping element G is used in an amount of 5,000ppm or less, based on the total weight of the cathode material precursor. The method of the present disclosure includes the designing of the doping element and the sintering temperature and sintering time in the sintering process, wherein the sintering temperature is within a range of 650-900°C, and the sintering time is within a range of 6-30h.

The sintering conditions comprise: a sintering temperature of 650-900°C; and a sintering time of 6-30h.

In the present disclosure, the growth of primary particles can be further controlled by controlling the type of the doping element G and the sintering conditions, especially the sintering temperature, in order to control the average area of the primary particles, such that the area of average pore diameter and the area of the primary particles of the prepared cathode material satisfy the definitions of the present disclosure, thereby maximizing the functions of pores without affecting the exertion of battery capacity. Specifically, a use of the particular type of the aforementioned doping element G can form a material which can increase the crystal particles during the reaction, control the growth direction and the crystal planes, so as to control a ratio of the major diameter to the minor diameter of the crystal particles, and control the interfacial contact and pores between the crystal particles. By controlling the content of the doping element G and the sintering temperature to be within the aforementioned ranges, the porosity on a surface of the cathode material can be reduced, and the residual alkali on a surface of the cathode material can be controlled.

Further, the added amounts of the doping element G solution and the doping element G cause that the doping element G is used in an amount of 0-3,000ppm, based on the total weight of the cathode material precursor.

Further, the sintering conditions comprise: a sintering temperature of 700-890°C; and a sintering time of 8-25h.

The doping element G is at least one element selected from the group consisting of Al, Mg, Ca, Sr, Zr, Nb and Mo.

The method used in the present invention comprises the designs in regard to the cladding element in a surface heat treatment process and the treatment temperature and treatment time in a heat treatment process, wherein the heat treatment temperature is within a range of 200-500°C, and the heat treatment time is within a range of 5-18h. The cladding element H is used in an amount of 5,000ppm or less, based on the total weight of the first sintered material.

In the present disclosure, when the used amount of the cladding element H satisfies the above-mentioned range, the transition metal and the surface doping element can be bonded with each other to stabilize the crystal structure, and ensure that a proper amount of addition does not block the intercalation and deintercalation of the lithium ions on a surface of the material, thereby effectively ensuring an exertion of the first charge-discharge capacity of the material.

Further, the cladding element H is used in an amount of 0-3000ppm, based on the total weight of the first sintered material.

According to the present disclosure, a use of the special type elements as the cladding element H enables that the cladding element further reacts with the residual alkali on a surface to generate a lithium metal oxide and form a cladding layer on the material surface, in order to stabilize the structure of the material surface and improve the cycle performance.

The cladding element H is at least one element selected from the group consisting of B, Al, Zr, Nb and Y.

According to the present disclosure, the heat treatment conditions comprises: a heat treatment temperature of 300-500°C; and a heat treatment time of 5-18h.

In the present disclosure, the heat treatment performed under the above-mentioned specific conditions can enable that the material only react with the residual alkali on the surface without further entering the crystal lattice and without forming an internal crystal structure that blocks the shuttling of lithium ions, merely form a thin cladding layer on a surface of the material, thereby effectively improving the cycle performance without reducing capacity of the material.

Further, the heat treatment conditions comprise: a heat treatment temperature of 300-480°C; and a heat treatment time of 5-12h.

A third aspect the present invention provides a use of the aforementioned cathode material in a lithium-ion battery.

The present disclosure will be described in detail below with reference to examples.

(1) X-ray diffraction test

The samples were measured with an XRD diffractometer (SmartLab 9KV) using a Cu Ka radiation source through a step scan and a small angle test method. The measurement results comprised diffraction diagrams of (003) peak and (104) peak. The glass sample holder was first loaded with excessive amount of materials, the surface was slightly pressed and scratched with a LED lamp, the parameters were set, the test category was selected, and the BB light path adjustment was performed. The cabin door was opened, the sample was placed on the sample table, the "Execute" button was clicked for carrying out the test, the data was saved, the test was completed.

(2) BET and pore diameter distribution test

The test was carried out using a Tri-star 3020 specific surface analyzer, 3g of sample was weighted, and the sample tube was mounted on a vacuum connector at the de-aeration station port. The heating temperature was set at 300°C and the de-aeration time was set at 120 min. After de-aeration was completed, the sample tube was cooled down. The mass of an empty sample tube and the mass of de-aerated sample and sample tube were input the tester software interface, and the output of the surface area data calculated by the software (BET method and BJH pore diameter test method) were recorded, the test of specific surface area and pore diameter distribution of the cathode material sample was accomplished.

(3) Particle size test

The test was carried out using a Mastersizer2000 laser particle size analyzer. The "sample test time" and a "background test time" in the item "number of tests" in "measurement" in the software were modified to 6s; a cycle number of the item "measurement cycle" was 3 times, a latency time was 5s, the option "creating a record of the average results from the measurement" was clicked. Next, the "Start" was clicked to automatically perform the background measurement; after the automatic measurement was completed, 40 mL of sodium pyrophosphate was initially added, a small amount of sample was then added with a medicine spoon, the "Start" was clicked until the light cover degree reached 1/2 of the 10-20% visual area, three results and an average value were recorded.

(4) MCT test

The measurement was performed using an MCT-210 miniature compression test machine. The MCT-210 test software was first started, the sample table was clamped at an intermediate position of a squash without sliding, to ensure that a height of the sample table was at least 3cm below the objective lens; the LED light switch in the host machine was turned on, and the hand wheel at the bottom right position of the host machine was shaken, so as to adjust the height of the sample table to ensure that the image of the sample particles in the CCD image display window was distinct. The "start testing" was clicked to measure the particle diameter, the image of particles prior to the compression was saved; the hand wheel was rotated, the particle apex was moved to the lens focus, the sample table was pushed to right side to underneath the squash, the compression test was started; after completion of compression, the sample table was pushed to left side to underneath the objective lens, the hand wheel was rotated until the image obtained after compression was distinct, the image was saved.

(5) Morphology of cathode material

The Morphology of the cathode material was tested using a Scanning Electron Microscope (SEM), the cathode material was first subjected to treatments such as embedding, it was then placed in an ion grinder and subjected to thinning to obtain an ion-milled cross-sectional sample of particles. Finally, the cross-sectional sample was fastened on a SEM sample table for carrying out the SEM analysis.

(6) Battery performance testing

The button-type battery was placed for 2h following the fabrication, after the open circuit voltage was stabilized, the cathode was charged to a cut-off voltage 4.3V with a current density of 0.1C, then charged at a constant voltage for 30min, subsequently discharged to the cut-off voltage of 3V with the same current density, the charging and discharging process was performed once more with the same manner, the battery in the meanwhile was regarded as the activated battery.
The cycle performance test was as follows: using the activated cell, the capacity retention ratio was measured by performing the charging and discharging process for 50 cycles under a temperature of 45°C with a current density of 1C (200mA/g) and a voltage range of 3-4.3V.
Each of the raw materials used in the Examples and Comparative Examples was commercially available.

Example 1

(1) Nickel sulfate, cobalt sulfate, manganese sulfate were jointly added into water according to a molar ratio of nickel sulfate: cobalt sulfate: manganese sulfate =85:9:6 to form a mixed salt solution.

(2) An aqueous solution of sodium hydroxide was added into a reaction kettle as a precipitating agent, ammonium hydroxide was used as a complexing agent, the temperature of the reaction kettle was controlled at 45°C and the total time t for the co-precipitation reaction was 90h. In a first phase, the pH of the reaction kettle was controlled to be 12.5, the reaction residence time was 30h (the time period of co-precipitation reaction was 0-t/3), the nitrogen gas with a content of 97vol% and the oxygen gas with a content of 3vol% were introduced throughout the phase; in a second phase, the pH of the reaction kettle was controlled to be 11.9, the reaction residence time was 30h (the time period of co-precipitation reaction was t/3-2t/3), the nitrogen gas with a content of 98vol% and the oxygen gas with a content of 2vol% were introduced throughout the phase; in the third phase, the pH was controlled to be 11.3, the reaction residence time was 30h (the time period of co-precipitation reaction was 2t/3-t/3), and nitrogen gas was fed throughout the phase. After the reaction was completed, the reaction product was filtered with a filter press and subjected to separation, and then washed with a sodium hydroxide solution, and subjected to drying at 200°C for 8 hours, such that the cathode material precursor $Ni_{0.85}Co_{0.09}Mn_{0.06}(OH)_2$ was produced.

(3) The cathode material precursor and LiOH were pre-mixed with a dry method according to a molar ratio of 1:1.03, after the pre-mixing was completed, $Nb_2O_5$ was used as a dopant, the cathode material precursor and $Nb_2O_5$ were blended with a common dry method, wherein Nb was added in an amount of 3000ppm by mass based on the total weight of the cathode material precursor. The mixed materials were subjected to sintering at 765°C for 20h under an oxygen atmosphere to obtain a first sintered material.

(4) The first sintered material was further subjected to surface cladding and surface heat treatment, the cladding elements were $H_3BO_3$ and $Y_2O_3$, wherein B was used in an amount of 2000ppm by mass and Y was used in an amount of 1000ppm by mass, based on the total weight of the first sintered material, the materials were mixed by using a dry method. The heat treatment temperature was controlled at 350°C and the heat treatment time was 12h. After the heat treatment was completed, the materials were subjected to cooling and sieving, the cathode material A1 was prepared.

Examples 2-10

The cathode materials were prepared according to the method of Example 1, the raw material ratios and specific process conditions were shown in Table 1. The cathode materials A2-A10 were prepared Example 8 is not according to the invention.

Comparative Examples 1-4

The cathode materials were prepared according to the method of Example 1, the raw material ratios and specific process conditions were shown in Table 1. The cathode materials D1-D4 were prepared.

Table 1

| Phases | | | Example 1 | Example 2 | Example 3 | Example 4 |
|---|---|---|---|---|---|---|
| Molar ratio of transition metal | | Ni | 85 | 85 | 85 | 85 |
| | | Co | 9 | 9 | 9 | 9 |
| | | Type/dosage of M | Mn/6 | Mn/6 | Mn/6 | Mn/6 |
| Synthesis of precursor | | Time of first phase | 0-t/3 | 0-t/3 | 0-t/3 | 0-t/3 |
| | | pH of first phase | 12.5 | 12.5 | 12.5 | 12 |
| | | Atmosphere of first phase | 97vol%N$_2$, 3vol%O$_2$ | 97vol%N$_2$, 3vol%O$_2$ | 97vol%N$_2$, 3vol%O$_2$ | 95vol%N$_2$, 5vol%O$_2$ |
| | | Time of second phase | t/3-2/3t | t/3-2/3t | t/3-2/3t | t/3-2/3t |
| | | pH of second phase | 11.9 | 11.9 | 11.9 | 11 |
| | | Atmosphere of second phase | 98vol%N$_2$, 2vol%O$_2$ | 98vol%N$_2$, 2vol%O$_2$ | 98vol%N$_2$, 2vol%O$_2$ | 98vol%N$_2$, 2vol%O$_2$ |
| | | Time of third phase | 2/3t-t | 2/3t-t | 2/3t-t | 2/3t-t |
| | | pH of third phase | 11.3 | 11.3 | 11.3 | 10 |
| | | Atmosphere of third phase | 100vol%N$_2$ | 100vol%N$_2$ | 100vol%N$_2$ | 100vol%N$_2$ |
| | | Total time of synthesis | 90h | 90h | 90h | 90h |
| | | Type of doping element M | / | / | / | / |
| | | Doping amount/ppm | / | / | / | / |
| Sintering | | Type of doping element | Nb | Mo | Sr/Mg | Nb |
| | | Doping amount/ppm | 3000 | 3000 | 2000/1000 | 3000 |
| | | Sintering temperature*time | 765°C *20h | 780°C *20h | 800°C *15h | 765°C *20h |
| Heat treatment | | Type of cladding element | B/Y | Al | B/Zr | B/Y |
| | | Cladding amount/ppm | 2000/1000 | 1500 | 1000/2000 | 2000/1000 |
| | | Heat treatment temperature*time | 350°C *12h | 500°C *12h | 400°C *12h | 350°C *12h |

Table 1 (continued)

| Phases | | Example 5 | Example 6 | Example 7 | Example 8 |
|---|---|---|---|---|---|
| Molar ratio of transition metal | Ni | 85 | 90 | 85 | 85 |
| | Co | 9 | 6 | 9 | 9 |
| | Type/dosage of M | Mn/6 | Mn/4 | Mn/6 | Mn/6 |
| Synthesis of precursor | Time of first phase | 0-t/3 | 0-t/3 | 0-t/3 | 0-t/3 |
| | pH of first phase | 12.5 | 12.5 | 12.5 | 12.5 |
| | Atmosphere of first phase | $97vol\%N_2$, $3vol\%O_2$ | $97vol\%N_2$, $3vol\%O_2$ | $97vol\%N_2$, $3vol\%O_2$ | $97vol\%N_2$, $3vol\%O_2$ |
| | Time of second phase | t/3-2/3t | t/3-2/3t | t/3-2/3t | t/3-2/3t |
| | pH of second phase | 11.9 | 11.9 | 11.9 | 11.9 |
| | Atmosphere of second phase | $98vol\%N_2$, $2vol\%O_2$ | $98vol\%N_2$, $2vol\%O_2$ | $98vol\%N_2$, $2vol\%O_2$ | $98vol\%N_2$, $2vol\%O_2$ |
| | Time of third phase | 2/3t-t | 2/3t-t | 2/3t-t | 2/3t-t |
| | pH of third phase | 11.3 | 11.3 | 11.3 | 11.3 |
| | Atmosphere of third phase | $100vol\%N_2$ | $100vol\%N_2$ | $100vol\%N_2$ | $100vol\%N_2$ |
| | Total time of synthesis | 180h | 90h | 90h | 90h |
| | Type of doping element M | / | / | Nb | / |
| | Doping amount/ppm | / | / | 3000 | / |
| Sintering | Type of doping element | Nb | Sr/Mg | / | / |
| | Doping amount/ppm | 3000 | 2000/1000 | / | / |
| | Sintering temperature*time | 765°C *20h | 800°C *15h | 765°C *20h | 765°C *20h |
| Heat treatment | Type of cladding element | B/Y | B/Zr | B/Y | / |
| | Cladding amount/ppm | 2000/1000 | 1000/2000 | 2000/1000 | / |
| | Heat treatment temperature*time | 350°C *12h | 400°C * 12h | 350°C *12h | 350°C *12h |

Table 1 (continued)

| Phases | | Example 9 | Example 10 |
|---|---|---|---|
| Molar ratio of transition metal | Ni | 85 | 85 |
| | Co | 9 | 9 |
| | Type/dosage of M | Mn/6 | Al/6 |
| Synthesis of precursor | Time of first phase | 0-t/3 | 0-t/3 |
| | pH of first phase | 12.5 | 12.5 |
| | Atmosphere of first phase | $97vol\%N_2$, $3vol\%O_2$ | $97vol\%N_2$, $3vol\%O_2$ |
| | Time of second phase | t/3-2/3t | t/3-2/3t |
| | pH of second phase | 11 | 11.9 |
| | Atmosphere of second phase | $98vol\%N_2$, $2vol\%O_2$ | $98vol\%N_2$, $2vol\%O_2$ |
| | Time of third phase | 2/3t-t | 2/3t-t |
| | pH of third phase | 10.9 | 11.3 |
| | Atmosphere of third phase | $100vol\%N_2$ | $100vol\%N_2$ |
| | Total time of synthesis | 90h | 90h |
| | Type of doping element M | / | Nb |
| | Doping amount/ppm | / | 3000 |
| Sintering | Type of doping element | Nb | / |
| | Doping amount/ppm | 3000 | / |
| | Sintering temperature*time | 765°C *20h | 765°C *20h |
| Heat treatment | Type of cladding element | B/Y | B/Y |
| | Cladding amount/ppm | 2000/1000 | 2000/1000 |
| | Heat treatment temperature*time | 350°C *12h | 350°C *12h |

Table 1 (continued)

| Phases | | Example 1 | Comparative Example 1 | Comparative Example 2 | Comparative Example 3 | Comparative Example 4 |
|---|---|---|---|---|---|---|
| Molar ratio of transition metal | Ni | 85 | 85 | 85 | 85 | 85 |
| | Co | 9 | 9 | 9 | 9 | 9 |
| | Type/dosage of M | Mn/6 | Mn/6 | Mn/6 | Mn/6 | Mn/6 |
| Synthesis of precursor | Time of first phase | 0-t/3 | 0-t/3 | 0-t/3 | 0-t/3 | 0-t/2 |
| | pH of first phase | 12.5 | 11.3 | 12.5 | 11.3 | 12.5 |
| | Atmosphere of first phase | 97vol%$N_2$, 3vol%$O_2$ | 100vol%$N_2$ | 97vol%$N_2$, 3vol%$O_2$ | 97vol%$N_2$, 3vol%$O_2$ | 98vol%$N_2$, 2vol%$O_2$ |
| | Time of second phase | t/3-2/3t | t/3-2/3t | t/3-2/3t | t/3-2/3t | t/2-t |
| | pH of second phase | 11.9 | 11.3 | 11.9 | 12.5 | 11.9 |
| | Atmosphere of second phase | 98vol%$N_2$, 2vol%$O_2$ | 100vol%$N_2$ | 98vol%$N_2$, 2vol%$O_2$ | 98vol%$N_2$, 2vol%$O_2$ | 100vol%$N_2$ |
| | Time of third phase | 2/3t-t | 2/3t-t | 2/3t-t | 2/3t-t | / |
| | pH of third phase | 11.3 | 11.3 | 11.3 | 11.9 | / |
| | Atmosphere of third phase | 100vol%$N_2$ | 100vol%$N_2$ | 100vol%$N_2$ | 100vol%$N_2$ | / |
| | Total time of synthesis | 90h | 90h | 90h | 90h | 90h |
| | Type of doping element M | / | / | / | / | / |
| | Doping amount/ppm | / | / | / | / | / |
| Sintering | Type of doping element | Nb | Nb | / | Nb | Nb |
| | Doping amount/ppm | 3000ppm | 3000ppm | / | 3000ppm | 3000ppm |
| | Sintering temperature*time | 765°C *20h | 800°C *20h | 630°C *20h | 800°C *20h | 800°C *20h |
| Heat treatment | Type of cladding element | B/Y | B/Y | / | B/Y | B/Y |
| | Cladding amount/ppm | 2000/1000 | 2000/1000 | / | 2000/1000 | 2000/1000 |
| | Heat treatment temperature*time | 350°C *12h | 350°C *12h | 350°C *12h | 350°C *12h | 350°C *12h |

EP 4 266 417 B1

14

Test Examples

The composition of the cathode materials prepared in the Examples and Comparative Examples was shown in Table 2, the structure and the properties of the cathode material were tested, the testing results were shown in Table 3.

Table 2

| | Composition |
|---|---|
| Example 1 | $Li_{1.03}(Ni_{0.832}Co_{0.088}Mn_{0.059}Nb_{0.003}B_{0.018}Y_{0.001})O_2$ |
| Example 2 | $Li_{1.03}(Ni_{0.843}Co_{0.089}Mn_{0.050}Mo_{0.003}Al_{0.005})O_2$ |
| Example 3 | $Li_{1.03}(Ni_{0.835}Co_{0.088}Mno_{0.059}Sr_{0.002}Mg_{0.004}B_{0.009}Zr_{0.002})O_2$ |
| Example 4 | $Li_{1.03}(Ni_{0.832}Co_{0.088}Mn_{0.059}Nb_{0.003}B_{0.018}Y_{0.001})O_2$ |
| Example 5 | $Li_{1.03}(Ni_{0.832}Co_{0.088}Mn_{0.059}Nb_{0.003}B_{0.018}Y_{0.001})O_2$ |
| Example 6 | $Li_{1.03}(Ni_{0.885}Co_{0.059}Mno_{0.039}Sr_{0.002}Mg_{0.004}B_{0.009}Zr_{0.002})O_2$ |
| Example 7 | $Li_{1.03}(Ni_{0.832}Co_{0.088}Mn_{0.059}Nb_{0.003}B_{0.018}Y_{0.001})O_2$ |
| Example 8 | $Li_{1.03}(Ni_{0.85}Co_{0.09}Mn_{0.06})O_2$ |
| Example 9 | $Li_{1.03}(Ni_{0.832}Co_{0.088}Mn_{0.059}Nb_{0.003}B_{0.018}Y_{0.001})O_2$ |
| Example 10 | $Li_{1.03}(Ni_{0.832}Co_{0.088}Al_{0.059}Nb_{0.003}B_{0.017}Y_{0.001})O_2$ |
| Comparative Example 1 | $Li_{1.03}(Ni_{0.832}Co_{0.088}Mn_{0.059}Nb_{0.003}B_{0.018}Y_{0.001})O_2$ |
| Comparative Example 2 | $Li_{1.03}(Ni_{0.85}Co_{0.00}Mn_{0.06})O_2$ |
| Comparative Example 3 | $Li_{1.03}(Ni_{0.832}Co_{0.088}Mn_{0.059}Nb_{0.003}B_{0.018}Y_{0.001})O_2$ |
| Comparative Example 4 | $Li_{1.03}(Ni_{0.832}Co_{0.088}Mn_{0.059}Nb_{0.003}B_{0.018}Y_{0.001})O_2$ |

Table 3

| | Example 1 | Example 2 | Example 3 | Example 4 | Example 5 | Example 6 | Example 7 | Example 8 |
|---|---|---|---|---|---|---|---|---|
| $d_{50}$/nm | 22.1 | 17.5 | 18.5 | 30.3 | 16.7 | 26.7 | 20.2 | 33.2 |
| $k_{90}$ | 3.2 | 3.8 | 5.7 | 3.4 | 3.1 | 4.5 | 2.8 | 6.2 |
| $S_{II}$/nm$^2$ | 383.6 | 240.5 | 268.8 | 721.1 | 219.0 | 559.9 | 320.5 | 865.7 |
| $S_I$/nm$^2$ | 406958 | 389004 | 748980 | 425278 | 412846 | 592812 | 385624 | 452685 |
| $\gamma$ | 0.094% | 0.062% | 0.036% | 0.170% | 0.053% | 0.094% | 0.08% | 0.19% |
| $D_{50}$/$\mu$m | 12.8 | 12.5 | 11.7 | 13.5 | 16.5 | 15.2 | 13 | 12.5 |
| $K_{95}$ | 0.52 | 0.64 | 1.2 | 0.95 | 0.58 | 0.65 | 0.57 | 0.60 |
| MCT/MPa | 112 | 125 | 95 | 126 | 150 | 98 | 135 | 88 |
| $I_{003}/I_{104}$ | 1.47 | 1.26 | 1.57 | 1.64 | 1.38 | 1.59 | 1.52 | 1.68 |
| $d_{003}/d_{104}$ | 1.55 | 1.52 | 1.38 | 1.62 | 1.59 | 1.48 | 1.65 | 1.75 |
| BET/m$^2$/g | 0.49 | 0.56 | 0.54 | 0.60 | 0.48 | 0.55 | 0.50 | 0.36 |
| Note: $\gamma = S_{II}/S_I \times 100\%$ | | | | | | | | |

Table 3 (continued)

| | Example 9 | Example 10 | Comparative Example 1 | Comparative Example 2 | Comparative Example 3 | Comparative Example 4 |
|---|---|---|---|---|---|---|
| $d_{50}$/nm | 35.8 | 25.4 | 9.8 | 44.7 | 42.1 | 8.5 |
| $k_{90}$ | 7.1 | 3.6 | 7.5 | 8.1 | 9 | 6.8 |
| $S_{II}$/nm$^2$ | 1006.6 | 506.7 | 75.4 | 1569.3 | 1392 | 56.7 |

(continued)

| | Example 9 | Example 10 | Comparative Example 1 | Comparative Example 2 | Comparative Example 3 | Comparative Example 4 |
|---|---|---|---|---|---|---|
| $S_I/nm^2$ | 526486 | 395682 | 856420 | 364582 | 352649 | 452685 |
| $\gamma$ | 0.19% | 0.13% | 0.009% | 0.43% | 0.39% | 0.01% |
| $D_{50}/\mu m$ | 12.6 | 13.1 | 11.2 | 9.8 | 13.5 | 11.6 |
| $K_{95}$ | 0.62 | 0.56 | 0.65 | 1.5 | 1.2 | 0.75 |
| MCT/MPa | 109 | 127 | 184 | 68 | 78 | 172 |
| $I_{003}/I_{104}$ | 1.2 | 1.42 | 1.52 | 0.9 | 1.78 | 0.98 |
| $d_{003}/d_{104}$ | 1.54 | 1.62 | 1.01 | 1.15 | 1.2 | 1.32 |
| BET/m$^2$/g | 0.53 | 0.52 | 0.28 | 0.87 | 0.62 | 0.58 |
| Note: $\gamma = S_{II}/S_I \times 100\%$ | | | | | | |

Application Examples

The cathode materials of the Examples and the Comparative Example were used for the preparation of a lithium-ion battery, the specific preparation method was as follows: a composite nickel cobalt manganese multi-element cathode material used for a non-aqueous electrolyte secondary battery, acetylene black and polyvinylidene fluoride (PVDF) were mixed according to a mass ratio of 95:3:2, the mixture was coated on aluminum foil and subjected to a drying process, the coated aluminum foil was subjected to a press-forming process with a pressure of 100MPa, in order to produce positive electrode having a diameter of 12mm and a thickness of 120$\mu$m, the positive electrode were placed in a vacuum drying oven and subjected to baking at 120°C for 12h.

The Li metal sheet having a diameter of 17mm and a thickness of 1 mm was used as the negative electrode; the polyethylene porous membrane having a thickness of 25$\mu$m was used as the diaphragm; 1mol/L of a mixture consisting of LiPF$_6$, ethylene carbonate (EC) and diethyl carbonate (DEC) in an equal amount was used as the electrolyte.

The properties of a lithium-ion battery were tested, the test results were shown in Table 4.

Table 4

| | Discharge capacity at 0.1C / mAh/g | Capacity retention ratio after 50 cycles / % |
|---|---|---|
| Example 1 | 210.5 | 98.9 |
| Example 2 | 209.1 | 99.1 |
| Example 3 | 209.4 | 99.1 |
| Example 4 | 208.6 | 99.2 |
| Example 5 | 208.4 | 98.7 |
| Example 6 | 212.5 | 97.5 |
| Example 7 | 210.6 | 98.8 |
| Example 8 | 212.7 | 97.2 |
| Example 9 | 211.7 | 97.6 |
| Example 10 | 209.5 | 98.9 |
| Comparative Example 1 | 205.4 | 97.9 |
| Comparative Example 2 | 208.5 | 95.2 |
| Comparative Example 3 | 210.5 | 94.2 |
| Comparative Example 4 | 204.6 | 95.6 |

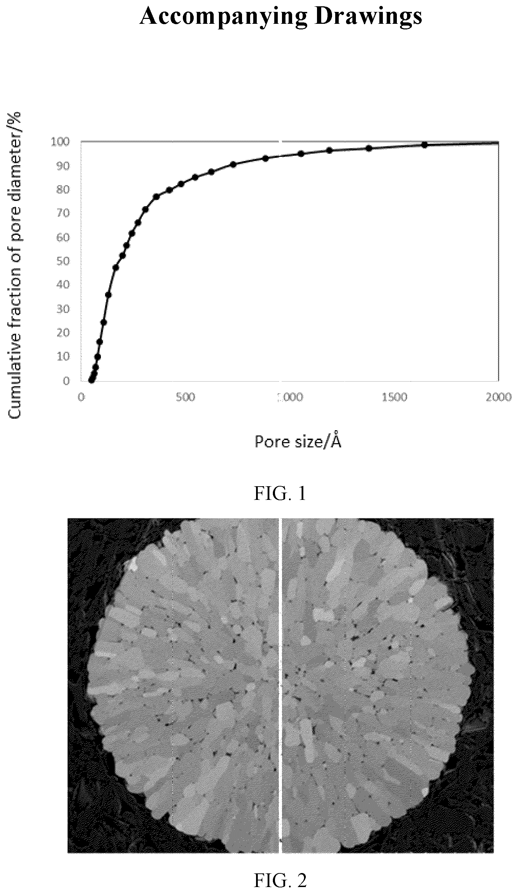

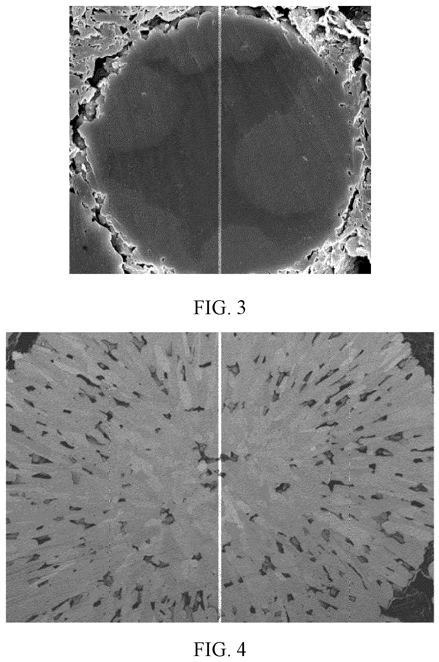

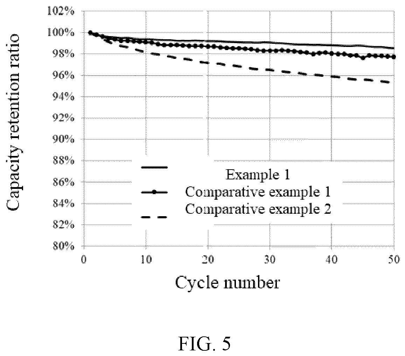

FIG. 1 illustrates a graph of pore diameter distribution and cumulative fraction of pore diameter of the cathode material A1 prepared in Example 1; as shown in Fig. 1, the trend chart of the pore diameter fraction is close to a logarithmic form. FIG. 2 illustrates a SEM graph of a cross-section of the cathode material A2 prepared in Example 1; FIG. 3 illustrates a SEM graph of a cross-section of the cathode material D1 prepared in Comparative Example 1; FIG. 4 illustrates a SEM graph of a cross-section of the cathode material D2 prepared in Comparative Example 2; as shown in FIGS. 2-4, the cross-sections of the cathode materials have different pore sizes and pore diameter distribution. FIG. 5 illustrates a cycle curve graph of lithium-ion batteries fabricated with the cathode material A1, the cathode material D1 and the cathode material D2, as shown in FIG. 5, the electrochemical performance of the lithium-ion battery prepared with the cathode material of the present disclosure having a specific pore diameter and pore diameter distribution is more excellent.

As indicated by Table 2, Table 3 and Table 4, the lithium-ion battery fabricated by using a cathode material of the present disclosure having a specific pore diameter and pore diameter distribution, not only exhibits a high initial charge-discharge capacity, but also has a high capacity retention ratio.

Further, when the cathode material has a specific microstructure, grain strength and the like, both the initial charge-discharge capacity and capacity retention ratio of the lithium-ion battery can be further improved, so that the comprehensive performance of the battery is further enhanced.

## Claims

1.    A cathode material, wherein the cathode material is composed of secondary particles formed by agglomeration of primary particles; and the pore diameters $d_{10}$, $d_{50}$ and $d_{90}$ of the secondary particles obtained by BJH satisfy the following relationship: $10nm \leq d_{50} \leq 40nm$; $1 \leq k_{90} \leq 8$ ; wherein $k_{90}=(d_{90}-d_{10})/d_{50}$;

   wherein the cathode material has a composition as shown in Formula I:

$$Li_e(Ni_{1-x-y-z-m}Co_xM_yG_zH_m)O_2 \qquad \text{Formula I;}$$

   wherein $0.95 \leq e \leq 1.1$, $0.53 \leq 1-x-y-z-m < 0.99$, $0<y<0.15$, $0<z<0.03$, $0<m<0.03$;
   M is Mn, G is at least one doping element selected from the group consisting of Al, Mg, Ca, Sr, Zr, Nb and Mo, and H is at least one cladding element selected from the group consisting of B, Zr, Nb, Al and Y;
   wherein the BET of the cathode material satisfies the following relationship: $0.25m^2/g \leq BET \leq 0.95m^2/g$;
   wherein a ratio $\gamma$ of an area $S_{II}$ of pore diameters of average sizes of the secondary particles to an average area $S_I$ of the primary particles satisfies the following relationship: $0.01\% \leq \gamma \leq 0.2\%$;
   wherein $S_I$ and $S_{II}$ are defined and determined according to the description.

2.    The cathode material of claim 1, wherein the pore diameters $d_{10}$, $d_{50}$ and $d_{90}$ of the secondary particles obtained by BJH satisfy the following relationship: $12nm \leq d_{50} \leq 35nm$; $2 \leq k_{90} \leq 6$.

3.    The cathode material of claim 1 or 2, wherein a ratio y of an area $S_{II}$ of pore diameters of average sizes of the secondary particles to an average area $S_I$ of the primary particles satisfies the following relationship:

$$0.05\% \leq \gamma \leq 0.20\%;$$

   preferably, a peak intensity $I_{103}$ of the (003) crystallographic plane and a peak intensity $I_{104}$ of the (104) crystallographic plane of the cathode material obtained by XRD satisfying the following relationship: $1 \leq I_{003}/I_{104} \leq 1.8$; more preferably, $1.1 \leq I_{003}/I_{104} \leq 1.7$;
   preferably, an interlayer spacing $d_{003}$ of the (003) crystallographic plane and an interlayer spacing $d_{104}$ of the (104) crystallographic plane of the cathode material obtained by XRD satisfy the following relationship: $d_{003}/d_{104} \geq 1$; more preferably, $1.2 \leq d_{003}/d_{104} \leq 3$;
   preferably, the grain diameters $D_5$, $D_{50}$ and $D_{95}$ of the cathode material satisfy the following relationship: $5\mu m \leq D_{50} \leq 20\mu m$; $0.5 \leq K_{95} \leq 2$, wherein $K_{95}=(D_{95}-D_5)/D_{50}$; more preferably, $8\mu m \leq D_{50} \leq 15\mu m$; $0.6 \leq K_{95} \leq 1.8$;
   preferably, a particle strength MCT of the cathode material satisfies the following relationship: $60MPa \leq MCT \leq 200MPa$, more preferably $80MPa \leq MCT \leq 180MPa$;
   wherein the strength MCT of the cathode material is measured by a miniature compression test machine;
   the BET of the cathode material satisfies the following relationship:

$$0.3m^2/g \leq BET \leq 0.85m^2/g.$$

4. A method for preparing a cathode material of any one of claims 1 -3 comprising:

(1) blending a nickel salt, a cobalt salt and a M salt according to a molar ratio of Ni: Co: M = (1-x-y-z-M): x: y to prepare a mixed salt solution; and using a doping element to prepare a doping element G solution;

(2) adding the mixed salt solution, precipitant, a complexing agent and optionally the doping element G solution into a reaction kettle, carrying out a co-precipitation reaction, and subjecting the reaction product to filtering, washing and drying to obtain a cathode material precursor;

(3) mixing the cathode material precursor, a Li source and optionally the doping element G, and sintering the mixture to obtain a first sintered material;

(4) cladding the first sintered material with a cladding element H, then carrying out a heat treatment, to obtain the cathode material;

wherein the total time for the co-precipitation reaction is t, and the pH values of the different phases of the co-precipitation reaction are controlled;

when the co-precipitation reaction is performed during the 0-t/3 phase,

the pH is controlled to be Q1; when the co-precipitation reaction is performed during the t/3-2/3 phase, the pH is controlled to be Q2; and

when the co-precipitation reaction is performed during the 2/3t-t phase, the pH is controlled to be Q3;

wherein $13 > Q1 > Q2 > Q3 > 10$;

wherein the heat treatment conditions in step (4) comprise: a heat treatment temperature of 200-500°C; and a heat treatment time of 5-18h;

wherein the Li source in step (3) is added in an amount such that $0.9 \leq [n(Li)]/[n(Ni)+n(Co)+n(M)] \leq 1.3$;

preferably, $10h \leq t \leq 120h$, more preferably, $15h \leq t \leq 100h$;

preferably, the temperature of co-precipitation reaction is within a range of 30-100°C, more preferably within a range of 40-70°C;

preferably, the Q1, Q2 and Q3 are decremented in an arithmetic progression.

5. The method of claim 4, wherein the co-precipitation reaction in step (2) is performed in the presence of nitrogen gas and/or oxygen gas;

preferably, when the co-precipitation reaction is performed during the 0-t/3 phase, the co-precipitation reaction is performed in the presence of nitrogen gas and oxygen gas, the volume fraction of oxygen gas is 0-5vol%, based on the total volume of nitrogen gas and oxygen gas;

preferably, when the co-precipitation reaction is performed during the t/3-2/3t phase, the co-precipitation reaction is performed in the presence of nitrogen gas and oxygen gas, the volume fraction of oxygen is 0-3vol%, based on the total volume of nitrogen gas and oxygen gas;

when the co-precipitation reaction is performed during the 2/3t-t phase, the co-precipitation reaction is performed in the presence of nitrogen gas.

6. The method of claim 4 or 5, wherein the added amounts of the doping element G solution and the doping element G in step (3) cause that the doping element G is used in an amount of 5,000ppm or less, preferably 0-3,000ppm, based on the total weight of the cathode material precursor;

preferably, the sintering conditions in step (3) comprise: a sintering temperature of 650-900°C, more preferably 700-890°C; and a sintering time of 6-30h, more preferably 8-25h;

preferably, the cladding element H in step (4) is used in an amount of 5,000ppm or less, preferably 0-3,000ppm, based on the total weight of the first sintered material;

preferably, the heat treatment conditions in step (4) comprise: a heat treatment temperature of 300-480°C; and a heat treatment time of 5-12h;

preferably, the nickel salt is at least one selected from the group consisting of nickel sulfate, nickel nitrate and nickel chloride;

preferably, the cobalt salt is at least one selected from the group consisting of cobalt sulfate, cobalt nitrate and cobalt chloride; preferably, the M salt is a Mn salt, more preferably, the Mn salt is at least one selected from the group consisting of manganese sulphate, manganese nitrate and manganese chloride;

7. A use of the cathode material of any one of claims 1-3 in a lithium-ion battery.

**Patentansprüche**

1.  Kathodenmaterial, wobei das Kathodenmaterial aus Sekundärpartikeln zusammengesetzt ist, die durch Agglomeration von Primärpartikeln gebildet sind; und die mittels BJH erhaltenen Porendurchmesser $d_{10}$, $d_{50}$ und $d_{90}$ der Sekundärpartikel die folgende Beziehung erfüllen: $10nm \leq d_{50} \leq 40nm$; $1 \leq k_{90} \leq 8$; wobei $k_{90} = (d_{90} - d_{10}) / d_{50}$; wobei das Kathodenmaterial eine Zusammensetzung wie in Formel I gezeigt aufweist:

$$Li_e(Ni_{1}\text{-}x\text{-}y\text{-}z\text{-}_mC OxMyGzH_m)O_2 \qquad \text{Formel I;}$$

    in welcher $0,95 < e \leq 1,1$; $0,53 \leq 1\text{-}x\text{-}y\text{-}z\text{-}m < 0,99$; $0 < y < 0,15$; $0 < z < 0,03$; $0 < m < 0,03$;
    M Mn ist, G mindestens ein Dotierungselement ist, das aus der Gruppe bestehend aus Al, Mg, Ca, Sr, Zr, Nb und Mo ausgewählt ist, und H mindestens ein Hüllelement ist, das aus der Gruppe bestehend aus B, Zr, Nb, Al und Y ausgewählt ist;
    wobei der BET-Wert des Kathodenmaterials die folgende Beziehung erfüllt:

    $$0,25m^2/g \leq BET \leq 0,95m^2/g;$$

    wobei ein Verhältnis $\gamma$ einer Fläche $S_{II}$ von Porendurchmessern mittlerer Größen der Sekundärpartikel zu einer mittleren Fläche $S_I$ der Primärpartikel die folgende Beziehung erfüllt: $0,01\% \leq \gamma \leq 0,2\%$;
    wobei $S_I$ und $S_{II}$ gemäß der Beschreibung definiert und bestimmt sind.

2.  Kathodenmaterial nach Anspruch 1, wobei die durch BJH erhaltenen Porendurchmesser $d_{10}$, $d_{50}$ und $d_{90}$ der Sekundärpartikel die folgende Beziehung erfüllen: $12nm \leq d_{50} \leq 35nm$; $2 < k_{90} \leq 6$.

3.  Kathodenmaterial nach Anspruch 1 oder 2, wobei ein Verhältnis $\gamma$ einer Fläche $S_{II}$ von Porendurchmessern mittlerer Größen der Sekundärpartikel zu einer mittleren Fläche $S_I$ der Primärpartikel die folgende Beziehung erfüllt: $0,05\% \leq \gamma \leq 0,20\%$;

    vorzugsweise eine Peakintensität $I_{103}$ der (003) kristallographischen Ebene und eine Peakintensität $I_{104}$ der (104) kristallographischen Ebene des durch XRD erhaltenen Kathodenmaterials die folgende Beziehung erfüllen: $1 \leq I_{103}/I_{104} \leq 1,8$; bevorzugter, $1,1 \leq 1103/1104 \leq 1,7$;
    vorzugsweise ein Zwischenschichtabstand $d_{003}$ der (003) kristallographischen Ebene und ein Zwischenschichtabstand $d_{104}$ der (104) kristallographischen Ebene des durch XRD erhaltenen Kathodenmaterials die folgende Beziehung erfüllen: $d_{003}/d_{104} \geq 1$; bevorzugter $1,2 \leq d_{003}/d_{104} \leq 3$;
    vorzugsweise die Korndurchmesser $D_5$, $D_{50}$ und $D_{95}$ des Kathodenmaterials die folgende Beziehung erfüllen: $5\mu m \leq D_{50} \leq 20\mu m$; $0,5 < K_{95} \leq 2$, wobei $K_{95} = (D_{96}\text{-}D_6)/D_{50}$; bevorzugter $8\mu m \leq D_{50} \leq 15\mu m$; $0,6 \leq K_{95} \leq 1,8$;
    vorzugsweise eine Partikelfestigkeit MCT des Kathodenmaterials die folgende Beziehung erfüllt: $60MPa \leq MCT \leq 200MPa$, bevorzugter $80MPa < MCT \leq 180MPa$;
    wobei die Festigkeit MCT des Kathodenmaterials durch eine Miniatur-Druckprüfmaschine gemessen wird; und der BET-Wert des Kathodenmaterials die folgende Beziehung erfüllt:

    $$0,3m^2/g \leq BET \leq 0,85m^2/g.$$

4.  Verfahren zur Herstellung eines Kathodenmaterials nach einem der Ansprüche 1-3, das aufweist:

    (1) Mischen eines Nickelsalzes, eines Kobaltsalzes und eines M-Salzes gemäß einem Molverhältnis von Ni: Co: M = (1-x-y-z-M): x: y, um eine gemischte Salzlösung herzustellen; und Verwenden eines Dotierungselements, um eine Dotierungselement-G-Lösung herzustellen;
    (2) Zugeben der gemischten Salzlösung, eines Fällungsmittels, eines Komplexbildners und optional der Dotierungselement-G-Lösung in einen Reaktionskessel, Durchführen einer Co-Präzipitationsreaktion und Unterziehen des Reaktionsprodukts einer Filtration, Waschung und Trocknung, um einen Kathodenmaterial-Vorläufer zu erhalten;
    (3) Mischen des Kathodenmaterial-Vorläufers, einer Li-Quelle und optional des Dotierungselements G, und Sintern der Mischung, um ein erstes gesintertes Material zu erhalten;
    (4) Ummanteln des ersten gesinterten Materials mit einem Hüllelement H, dann Durchführen einer Wärmebehandlung, um das Kathodenmaterial zu erhalten;

wobei die Gesamtzeit für die Co-Präzipitationsreaktion t ist und die pH-Werte der verschiedenen Phasen der Co-Präzipitationsreaktion gesteuert werden;

wenn die Co-Präzipitationsreaktion während der 0-t/3-Phase durchgeführt wird, der pH-Wert auf Q1 gesteuert wird; wenn die Co-Präzipitationsreaktion während der t/3-2/3-Phase durchgeführt wird, der pH-Wert auf Q2 gesteuert wird; und wenn die Co-Präzipitationsreaktion während der 2/3t-t-Phase durchgeführt wird, der pH-Wert auf Q3 gesteuert wird;

wobei

$$13 > Q1 > Q2 > Q3 > 10;$$

wobei die Wärmebehandlungsbedingungen in Schritt (4) aufweisen: eine Wärmebehandlungstemperatur von 200-500°C; und eine Wärmebehandlungszeit von 5-18h; wobei die Li-Quelle in Schritt (3) in einer Menge zugegeben wird, sodass $0,9 \leq [n(Li)]/[n(Ni)+n(Co)+n(M)] \leq 1,3$;

vorzugsweise $10h \leq t \leq 120h$, besonders bevorzugt, $15h \leq t \leq 100h$;

vorzugsweise die Temperatur der Co-Präzipitationsreaktion in einem Bereich von 30-100°C liegt, bevorzugter in einem Bereich von 40-70°C;

vorzugsweise die Q1, Q2 und Q3 in einer arithmetischen Progression dekrementiert werden.

5. Verfahren nach Anspruch 4, wobei die Co-Präzipitationsreaktion in Schritt (2) in Gegenwart von Stickstoffgas und/oder Sauerstoffgas durchgeführt wird;

vorzugsweise, wenn die Co-Präzipitationsreaktion während der 0-t/3-Phase durchgeführt wird, die Co-Präzipitationsreaktion in Gegenwart von Stickstoffgas und Sauerstoffgas durchgeführt wird, der Volumenanteil von Sauerstoffgas 0-5 Vol.-% beträgt, bezogen auf das Gesamtvolumen von Stickstoffgas und Sauerstoffgas;

vorzugsweise, wenn die Co-Präzipitationsreaktion während der t/3-2/3t-Phase durchgeführt wird, die Co-Präzipitationsreaktion in Gegenwart von Stickstoffgas und Sauerstoffgas durchgeführt wird, der Volumenanteil von Sauerstoff 0-3 Vol.-% beträgt, bezogen auf das Gesamtvolumen von Stickstoffgas und Sauerstoffgas;

wenn die Co-Präzipitationsreaktion während der 2/3t-t-Phase durchgeführt wird, die Co-Präzipitationsreaktion in Gegenwart von Stickstoffgas durchgeführt wird.

6. Verfahren nach Anspruch 4 oder 5, wobei die zugegebenen Mengen der Dotierungselement-G-Lösung und des Dotierungselements G in Schritt (3) bewirken, dass das Dotierungselement G in einer Menge von 5.000 ppm oder weniger, vorzugsweise 0-3.000 ppm, bezogen auf das Gesamtgewicht des Kathodenmaterial-Vorläufers, verwendet wird;

vorzugsweise die Sinterbedingungen in Schritt (3) aufweisen: eine Sintertemperatur von 650-900°C, bevorzugter 700-890°C; und eine Sinterzeit von 6-30h, bevorzugter 8-25h;

vorzugsweise das Hüllelement H in Schritt (4) in einer Menge von 5.000 ppm oder weniger, vorzugsweise 0-3.000 ppm, bezogen auf das Gesamtgewicht des ersten gesinterten Materials, verwendet wird;

vorzugsweise die Wärmebehandlungsbedingungen in Schritt (4) aufweisen: eine Wärmebehandlungstemperatur von 300-480°C; und eine Wärmebehandlungszeit von 5-12h;

vorzugsweise das Nickelsalz mindestens eines ist, das aus der Gruppe bestehend aus Nickelsulfat, Nickelnitrat und Nickelchlorid ausgewählt ist;

vorzugsweise das Kobaltsalz mindestens eines ist, das aus der Gruppe bestehend aus Kobaltsulfat, Kobaltnitrat und Kobaltchlorid ausgewählt ist;

vorzugsweise das M-Salz ein Mn-Salz ist, bevorzugter das Mn-Salz mindestens eines ist, das aus der Gruppe bestehend aus Mangansulfat, Mangannitrat und Manganchlorid ausgewählt ist.

7. Verwendung des Kathodenmaterials nach einem der Ansprüche 1-3 in einer Lithium-Ionen-Batterie.

**Revendications**

1. Matériau de cathode, dans lequel le matériau de cathode est composé de particules secondaires formées par l'agglomération de particules primaires ; et

les diamètres de pores $d_{10}$, $d_{50}$ et $d_{90}$ des particules secondaires obtenus par BJH satisfont à la relation suivante :

$10 \text{ nm} \leq d_{50} \leq 40 \text{ nm}$ ; $1 \leq k_{90} \leq 8$ ; dans lequel $k_{90} = (d_{90}\text{-}d_{10})/d_{50}$ ;
dans lequel le matériau de cathode présente une composition telle que représentée par la formule I :

$$Li_e \ (Ni_{x\text{-}x\text{-}y\text{-}z\text{-}m}Co_xM_yG_zH_m) \ O_2 \qquad \text{Formule I ;}$$

dans laquelle $0{,}95 \leq e \leq 1{,}1$, $0{,}53 \leq 1\text{-}x\text{-}y\text{-}z\text{-}m < 0{,}99$, $0 < y < 0{,}15$, $0 < z < 0{,}03$, $0 < m < 0{,}03$ ;
M est Mn, G est au moins un élément dopant sélectionné dans le groupe consistant en Al, Mg, Ca, Sr, Zr, Nb et Mo, et H est au moins un élément de revêtement sélectionné dans le groupe consistant en B, Zr, Nb, A1 et Y ;
dans lequel le BET du matériau de cathode satisfait à la relation suivante : $0{,}25 \text{ m}^2/\text{g} \leq BET \leq 0{,}95 \text{ m}^2/\text{g}$ ;
dans lequel un rapport y d'une surface $S_{II}$ de diamètres de pore de tailles moyennes des particules secondaires sur une surface moyenne $S_I$ des particules primaires satisfait à la relation suivante :

$$0{,}01 \ \% \ \leq \ \gamma \ \leq \ 0{,}2 \ \% \ ;$$

dans lequel $S_I$ et $S_{II}$ sont définis et déterminés selon la description.

2. Matériau de cathode selon la revendication 1, dans lequel les diamètres de pores $d_{10}$, $d_{50}$ et $d_{90}$ des particules secondaires obtenus par BJH satisfont à la relation suivante : $12 \text{ nm} \leq d_{50} \leq 35 \text{ mm}$ ; $2 \leq k_{90} \leq 6$.

3. Matériau de cathode selon la revendication 1 ou 2, dans lequel un rapport y d'une surface $S_{II}$ de diamètres de pore de tailles moyennes des particules secondaires sur une surface moyenne $S_I$ des particules primaires satisfait à la relation suivante : $0{,}05 \% \leq \gamma \leq 0{,}20 \%$ ;

de préférence, une intensité de pic $I_{103}$ du plan cristallographique (003) et une intensité de pic $I_{104}$ du plan cristallographique (104) du matériau de cathode obtenues par XRD satisfaisant à la relation suivante : $1 \leq I_{003}/I_{104} \leq 1{,}8$ ; plus préférentiellement, $1{,}1 \leq I_{003}/I_{104} \leq 1{,}7$ ;
de préférence, un espacement interplanaire $d_{003}$ du plan cristallographique (003) et un espacement interplanaire $d_{104}$ du plan cristallographique (104) du matériau de cathode obtenus par XRD satisfont à la relation suivante : $d_{003}/d_{104} \geq 1$ ; plus préférentiellement, $1{,}2 \leq d_{003}/d_{104} \leq 3$ ;
de préférence, les diamètres de grains $D_5$, $D_{50}$ et $D_{95}$ du matériau de cathode satisfont à la relation suivante : $5 \ \mu\text{m} \leq D_{50} \leq 20 \ \mu\text{m}$ ; $0{,}5 \leq K_{95} \leq 2$, dans laquelle $K_{95} = (D_{95}\text{-}D_5)/D_{50}$ ; plus préférentiellement, $8 \ \mu\text{m} \leq D_{50} \leq 15 \ \mu\text{m}$ ; $.0{,}6 \leq K_{95} \leq 1{,}8$ ;
de préférence, une résistance particulaire MCT du matériau de cathode satisfait à la relation suivante : $60 \text{ MPa} \leq MCT \leq 200 \text{ MPa}$, plus préférentiellement $80 \text{ MPa} \leq MCT \leq 180 \text{ MPa}$ ;
dans lequel la résistance MCT du matériau de cathode est mesurée par une machine d'essai de compression miniature ;
le BET du matériau de cathode satisfait à la relation suivante : $0{,}3 \text{ m}^2/\text{g} \leq BET \leq 0{,}85 \text{ m}^2/\text{g}$.

4. Procédé de préparation d'un matériau de cathode selon l'une quelconque des revendications 1 à 3, comprenant :

(1) le mélange d'un sel de nickel, d'un sel de cobalt et d'un sel de M selon un rapport molaire Ni: Co: M = (1-x-y-z-M) :x:y pour préparer une solution de sels mélangés ; et l'utilisation d'un élément dopant pour préparer une solution d'élément dopant G ;
(2) l'ajout de la solution de sels mélangés, d'un précipitant, d'un agent complexant et facultativement de la solution d'élément dopant G dans une cuve de réaction, la réalisation d'une réaction de co-précipitation, et la soumission du produit de réaction à un filtrage, un lavage et un séchage pour obtenir un précurseur de matériau de cathode ;
(3) le mélange du précurseur de matériau de cathode, d'une source de Li et facultativement de l'élément dopant G, et le frittage du mélange pour obtenir un premier matériau fritté ;
(4) le revêtement du premier matériau fritté avec un élément de revêtement H, puis la réalisation d'un traitement thermique, pour obtenir le matériau de cathode ;
dans lequel la durée totale pour la réaction de co-précipitation est t, et les valeurs de pH des différentes phases de la réaction de co-précipitation sont contrôlées ;
lorsque la réaction de co-précipitation est effectuée pendant la phase 0-t/3, le pH est contrôlé pour être Q1 ;
lorsque la réaction de co-précipitation est effectuée pendant la phase t/3-2/3, le pH est contrôlé pour être Q2 ; et
lorsque la réaction de co-précipitation est effectuée pendant la phase 2/3t-t, le pH est contrôlé pour être Q3 ;
dans lequel

$$13 > Q1 > Q2 > Q3 > 10 \ ;$$

dans lequel les conditions du traitement thermique à l'étape (4) comprennent : une température de traitement thermique de 200 à 500 °C ; et une durée de traitement thermique de 5 à 18 h ;

dans lequel la source de Li à l'étape (3) est ajoutée en une quantité telle que $0,9 \leq [n(Li)]/[n(Ni)+n(Co)+n(M)] \leq 1,3$ ;

de préférence, $10 \ h \leq t \leq 120 \ h$, plus préférentiellement, $15 \ h \leq t \leq 100 \ h$ ;

de préférence, la température de la réaction de co-précipitation se situe dans une plage de 30 à 100 °C, plus préférentiellement dans une plage de 40 à 70 °C ;

de préférence, les Q1, Q2 et Q3 sont décrémentés selon une progression arithmétique.

5. Procédé selon la revendication 4, dans lequel la réaction de co-précipitation à l'étape (2) est effectuée en présence d'azote gazeux et/ou d'oxygène gazeux ;

de préférence, lorsque la réaction de co-précipitation est effectuée pendant la phase 0-t/3, la réaction de co-précipitation est effectuée en présence d'azote gazeux et d'oxygène gazeux, la fraction volumique d'oxygène gazeux est de 0 à 5 % en volume, sur la base du volume total d'azote gazeux et d'oxygène gazeux ;

de préférence, lorsque la réaction de co-précipitation est effectuée pendant la phase t/3-2/3t, la réaction de co-précipitation est effectuée en présence d'azote gazeux et d'oxygène gazeux, la fraction volumique d'oxygène est de 0 à 3 % en volume, sur la base du volume total d'azote gazeux et d'oxygène gazeux ;

lorsque la réaction de co-précipitation est effectuée pendant la phase 2/3t-t, la réaction de co-précipitation est effectuée en présence d'azote gazeux.

6. Procédé selon la revendication 4 ou 5, dans lequel les quantités ajoutées de la solution d'élément dopant G et de l'élément dopant G à l'étape (3) entraînent l'utilisation de l'élément dopant G en une quantité de 5000 ppm ou moins, de préférence de 0 à 3000 ppm, sur la base du poids total du précurseur de matériau de cathode ;

de préférence, les conditions du frittage à l'étape (3) comprennent : une température de frittage de 650 à 900 °C, plus préférentiellement de 700 à 890 °C ; et une durée de frittage de 6 à 30 h, plus préférentiellement de 8 à 25 h ;

de préférence, l'élément de revêtement H à l'étape (4) est utilisé en une quantité de 5000 ppm ou moins, de préférence de 0 à 3000 ppm, sur la base du poids total du premier matériau fritté ;

de préférence, les conditions du traitement thermique à l'étape (4) comprennent : une température de traitement thermique de 300 à 480 °C ; et une durée de traitement thermique de 5 à 12 h ;

de préférence, le sel de nickel est au moins l'un sélectionné dans le groupe consistant en le sulfate de nickel, le nitrate de nickel et le chlorure de nickel ;

de préférence, le sel de cobalt est au moins l'un sélectionné dans le groupe consistant en le sulfate de cobalt, le nitrate de cobalt et le chlorure de cobalt ;

de préférence, le sel de M est un sel de Mn, plus préférentiellement, le sel de Mn est au moins l'un sélectionné dans le groupe consistant en le sulfate de manganèse, le nitrate de manganèse et le chlorure de manganèse.

7. Utilisation du matériau de cathode selon l'une quelconque des revendications 1 à 3 dans une batterie lithium-ion.

# Accompanying Drawings

FIG. 1

FIG. 2

FIG. 3

FIG. 4

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111611309
- CN 108123119 A
- US 2021280866 A1